# EUROPEAN PATENT SPECIFICATION

(11) **EP 4 208 707 B1**
(45) Date of publication and mention of the grant of the patent: **31.07.2024**
(21) Application number: 21794413.1
(22) Date of filing: 01.09.2021
(51) Int. Cl.: G01N 15/00, B01L 3/00, G01N 15/14, G01N 15/10, G01N 21/05, G01N 21/64, G01N 21/17

(54) **SORTING OF CELLULAR BODIES BASED ON FORCE SPECTROSCOPY**
SORTIEREN VON ZELLEN AUF BASIS DER KRAFTSPEKTROSKOPIE
TRI DES CELLULES BASÉ SUR LA SPECTROSCOPIE DE FORCE

(30) Priority: 01.09.2020 NL 2026393
(43) Date of publication of application: 12.07.2023
(73) Proprietor: LUMICKS CA Holding B.V., 1105 AG Amsterdam (NL)
(72) Inventor: REIJMERS, Rogier Martijn, 1059 CH Amsterdam (NL); SITTERS, Gerrit, 1059 CH Amsterdam (NL)
(74) Representative: De Vries & Metman
(86) International application number: PCT/NL2021/050533
(87) International publication number: WO 2022/050839

(56) References cited:
- WO-A2-2018/083193
- US-A1- 2003 194 697
- SARKAR ANIRUDDH ET AL: "Multiplexed Affinity-Based Separation of Proteins and Cells Using Inertial Microfluidics", vol. 6, no. 1, 30 March 2016 (2016-03-30), XP055804358, Retrieved from the Internet <URL:https://www.nature.com/articles/srep23589.pdf> [retrieved on 20210514], DOI: 10.1038/srep23589

## Description

### Field of the invention

The disclosure relates to sorting of cellular bodies based on force spectroscopy and, in particular, though not exclusively, to methods and systems for single cell sorting based on force spectroscopy, and a computer program product enabling a computer system to perform such methods.

### Background of the invention

The study of interactions between cellular bodies and cellular bodies and other molecules, e.g. the binding strength of cells on cells and cells on proteins, is a highly relevant and active research area in biosciences. For example, the avidity characterizes the cumulative effect of multiple individual binding interactions between cells. Similarly, the affinity characterizes the strength with which a cell, e.g. an antibody, binds to a protein complex that is part of a cell membrane of a target cell. The avidity and affinity are examples of parameters that play an essential role in the study and development of therapies in medicine, e.g. immune oncology.

A technique for studying interactions between cells or between cellular bodies and any ligands is referred to as force spectroscopy. For example, WO2018/083193 describes a so-called acoustic force spectroscopy (AFS) system that is configured to examine interactions between cells by applying a force to the cells. The system includes a microfluidic cell comprising a functionalised wall surface which may include target cells.

A plurality of effector cells, e.g. T-cells, can be flushed into the microfluidic cell, so that they can settle and bind to target cells. Thereafter, an acoustic source is used to exert a ramping force on the bound effector cells so that effector cells will detach from the target cells at a certain force. During this process, the spatiotemporal behaviour of the effector cells in the microfluidic cells is imaged using an imaging microscope. The interaction strength between cells, e.g. the force at which the effector cells detach, may be determined by analysing the captured video images during the ramping force. For example, the cell avidity of the effector cells can be determined this way.

WO2018/083193 suggests that the described force spectroscopy scheme can also be used for sorting cells. For example, a force ramp could be applied up to a certain value and all cells that detach during this force ramp may be flushed away and separated from the cells that did not detach. A shortcoming of this scheme is it only allows a very coarse way of sorting or separating groups of cells into sub-groups. It does not allow sorting of cells based on the detachment force of individual cells. Additionally, the scheme does not allow sorting of cells based on additional parameters, e.g. optical properties of cells.

Schemes for sorting individual cells are known in the art. For example, flow cytometry is a technique wherein a fluidic system is used to guide cells through a focusing region so that a stream of single cells is formed. An example of such microfluidic system is described in the article by Choi et al, *Microfluidic deformability-activated sorting of single particles*, Microsystems & Nanoengineering, 6, article number: 11 (2020) . Individual cells are pushed through a narrow nozzle, which may be regarded as an interrogation point, at which the deformability of the cell may be measured. Based on a measured response, a sorting action is triggered by switching a sorting valve downstream of the interrogation point to send the cell to a specific receiving reservoir.

Although single cell sorting is achieved, such schemes are limited in the sense that sorting is based on the deformability of a cell and not on information how cells interact with other cells or proteins, i.e. information that is essential for study and development of therapies in medicine. Moreover, the sorting scheme requires a measurement at the interrogation point, which may inhibit fast sorting schemes, which are desirable for high throughout sorting schemes.

Hence, from the above, it follows that there is a need in the art for improved cell sorting based on force spectroscopy. In particular, there is a need in the art for cell sorting system that allow single cell sorting based a cell interaction force and, optionally, other individual cell parameters.

### Summary of the invention

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non- exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including a functional or an object oriented programming language such as Java(TM), Scala, C++, Python or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer, server or virtualized server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), or graphics processing unit (GPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is an objective of the embodiments in this disclosure to reduce or eliminate at least one of the drawbacks known in the prior art.

The main insight of the embodiments in this disclosure revolves around sorting of single cellular bodies based on interaction information, i.e. information about an interaction or interactions, such as a binding force, of a single cellular body with another cellular body or a single cellular body with one or more proteins or other ligands. Force spectroscopy on a large ensemble of cellular bodies may be used to efficiently obtain specific interaction information for each of the cellular bodies (or at least a large part of the cellular bodies) a single cell shorting device may be controlled to sort the cellular bodies based on the interaction information.

The terms cellular bodies referred to in this application may include cell portions like subcellular organelles, cell nuclei, and/or mitochondria. The cellular bodies may be unicellular or pluricellular, such as small clumped cell groups, plant or animal biopts, dividing cells, budding yeast cells, colonial protists, etc. The cellular bodies may also be animal embryos in an early stage of development (e.g. the morula-stadium of a mammal, possibly a human embryo). In particular cases different types of cellular bodies may be studied together. E.g., cellular bodies from a mucosal swab, blood sample, or other probing techniques could be used. A cellular body may also be one or more immune cells, one or more tumor cells, one or more cells that have been infected, for example by a virus.

In an aspect, the invention relates to a method of sorting cellular bodies comprising: receiving images representing manipulation of first cellular bodies in a holding space of a flow cell, the flow cell including or being connected to a sorting device, the manipulation including: providing the first cellular bodies in the holding space to allow at least part of the first cellular bodies to contact a functionalized wall of the holding space; applying a force to the contacted first cellular bodies in a direction away from the functionalized wall for detaching at least part of the first cellular bodies; and, transporting the detached cellular bodies to the sorting device for individually sorting the detached cellular bodies; processing the sequence of images during the manipulation of the first cellular bodies and controlling the sorting device based on the image processing, the processing and controlling including: detecting detachments of first cellular bodies in the images during the application of the force; determining for each detected detached first cellular bodies a detachment force; tracking the location of detected detached first cellular bodies during the transport of the detached cellular bodies to the sorting device; and, sorting the detached cellular bodies by controlling the sorting device based on the detachment force.

Hence, a large set of cellular bodies may be classified based on force spectroscopy, such as acoustic force spectroscopy, in a holding space of a flow cell, wherein cellular bodies will detach from a functionalized wall of the holding space due to a force that is applied to the cellular bodies. Subsequent location tracking of the classified cellular bodies in the flow cell that move towards a sorting device allows individual sorting of the cellular bodies based on the detachment force or a parameter associated with the detachment force, which is a measure of how cellular bodies interact with cellular bodies and/or proteins of the functionalized wall space.

A functionalised wall surface as referred to herein may be provided with one or more primers. The primers may comprise one or more types of interaction moieties. In particular a functionalised wall surface may be provided with one or more substances comprising at least one of antibodies, peptides, biological tissue factors, biological tissue portions, bacteria, antigens, proteins, ligands, cells, tissues, viruses, (synthetic) drug compounds, lipid (bi)layers, fibronectin, cellulose, nucleic acids, RNA, small molecules, allosteric modulators, (bacterial) biofilms, "organ-on-a-chip", etc., and/or specific atomic or molecular surface portions (e.g. a gold surface) to which at least part of the cellular bodies tends to adhere with preference relative to other surfaces.

Cellular bodies may make contact with specific parts of the functionalized wall surface. Here, the term contact may include any type of contact that cellular bodies can make with substances of the functionalized wall surface. For example, a cell (e.g. an effector cell) may contact and / or bind to another cell (e.g. a target cell) based on specific cell-cell interaction, based on e.g. that one or more proteins on the surface of one cell binds to the one or more proteins on the surface of another cell. In general any receptor or molecule on one cell may interact with and/or bind to another molecule on another cell and such interaction may be specific (e.g. a receptor may bind with exceptionally high affinity to only to certain types of antigens or ligands). Any such interaction may be based on a single receptor - ligand pair, multiple receptor - ligand pairs of the same type or multiple pairs of different types.

In an embodiment, the force applied to the cellular bodies may be a bulk acoustic force.

In an embodiment, the manipulation may further include: focusing detached first cells into a stream of single first cellular bodies. Focusing the detached first cellular bodies into a stream of single cellular bodies may aid in the ability to sort individual cellular bodies based on their specific detachment force. A detachment force may for example be determined based on a measured detachment time, i.e. a time instance at which a specific cellular body detaches. Each specific cellular body, part of a plurality of cellular bodies has its own specific detachment time. Alternatively, the detachment force may be determined based on a detachment time and/or a specific detachment location of a specific cellular body (e.g. in case the force application is not homogeneous over the holding space but depends on the location in the holding space / the location on the functionalized wall. As long as the detachment time and/or detachment location is known for a cellular body (e.g. based on processing of images obtained during the manipulation of the cellular body) and the position of the cellular body can be tracked to an area where cellular bodies are focused into a stream of cellular bodies, a cell cellular body with a known detachment time and / or location can be identified based on its position in the stream of single cellular bodies. A sorting device can then select the specific cellular bodies from the stream of single cellular bodies based on its position in the ordered stream and/or the known time delay between the cell passing a certain location in the flow cell and the time it arrives at the sorting device of the sorting device. Single cell sorting devices are known in the art, such as the sorting device based on hydrodynamic sorting described in the article by Choi et al, (mentioned in the background section above), or, for example, a micromechanical single cell sorting devices based on MEMS technology as described in US9453787.

In an embodiment, the focusing may include guiding the detached first cellular bodies through a tapered focusing region of the flow cell or guiding the detached first cellular bodies through a hydrodynamic focusing region, preferably the hydrodynamic focusing region being formed by forming a laminar sheath flow along the edge of part of the flow cell or flow channel.

In an embodiment, the manipulating may further include: exposing one or more of the detached first cellular bodies to radiation of one or more predetermined wavelengths and determining one or more optical responses of the one or more detached first cellular bodies respectively; and, wherein the controlling of the sorting device is further based on the one or more optical responses.

In an embodiment, the processing may further include: determining for each detached first cellular body, a position at the functionalized wall at which detachment of the first cellular body occurred; determining the detachment force for each of the detached first cellular bodies based on the location and a force correction map of the holding space, the force correction map containing information for determining the detachment force as a function of the location in the holding space. The force correction map may be obtained from a separate force calibration experiment and may be specific for the flow cell or holding space.

In an embodiment, at least part of the first cellular bodies may be labelled first cellular bodies, preferably the labelling being based on an optically responsive molecule such as a fluorescent molecule, and wherein at least part of the images are captured using a fluorescent imaging system.

In an embodiment, the flow cell may include at least a first flow channel comprising the holding space, the first flow channel being connected to the sorting device.

In an embodiment, the flow cell may include a first flow channel and a second flow channel, the second flow channel crossing the first flow channel at a cross-section, the cross-section defining a part of the holding space which is configured as an acoustically active area and the sorting device being connected to the second flow channel.

In an embodiment, the first cellular bodies may be provided into the holding space via the first flow channel and wherein the detached first cellular bodies are transported towards the sorting device via the second flow channel.

In an embodiment, the sorting device may be configured to receive detached first cellular bodies and to move each of the detached first cellular bodies into one of a plurality of output channels based on the detachment force. In an embodiment, the sorting device may use a hydrodynamic force to move a first cellular body in one of the plurality of output channels. In another embodiment, the sorting device may use a micromechanical valve to move a first cellular body in one of the plurality of output channels.

In an embodiment, the functionalized wall may comprise second cellular bodies, wherein when the first cellular bodies are provided into the holding space, at least part of the first cellular bodies will contact at least part of the second cellular bodies, preferably the first cellular bodies being effector cells and the second cellular bodies being target cells; or, the second cellular bodies being effector cells and the first cellular bodies being target cells.

In an embodiment, the target and/or effector cells may include at least one of: Lymphocytes, monocytic cells, granulocytes, T cells, natural killer cells, B-Cells, CAR-T cells, dendritic cells, Jurkat cells , bacterial cells, red blood cells, macrophages, TCR Tg T-cells, OT-I / OT-II cells, splenocytes, thymocytes, BM derived hematopoietic stem cells, TILs, tissue derived macrophages, innate lymphoid cells; and/or, wherein the second cells include at least one of: tumor cells, stem cells, epithelial cells, B16 melanoma, fibroblasts, endothelial cells, HEK293, HeLa, 3T3, MEFs, HuVECs, microglia, neuronal cells.

In another aspect, the invention may relate to a module for sorting cellular bodies based on images of cellular bodies in a flow cell connected to a sorting device, the module comprising a computer readable storage medium having computer readable program code embodied therewith, and a processor, preferably a microprocessor, coupled to the computer readable storage medium, wherein responsive to executing the computer readable program code, the processor is configured to perform executable operations comprising: receiving images representing manipulation of first cellular bodies in a holding space of a flow cell, the flow cell including or being connected to a sorting device, the manipulation including: providing the first cellular bodies in the holding space to allow at least part of the first cells to contact a functionalized wall of the holding space; applying a force, preferably an acoustic force, to the contacted first cellular bodies in a direction away from the functionalized wall for detaching at least part of the first cells; and, transporting the detached cellular bodies to the sorting device for individually sorting the detached cellular bodies; processing the sequence of images during the manipulation of the first cells and controlling the sorting device based on the image processing, the processing and controlling including: detecting detachments of first cellular bodies in the images during the application of the force; determining for each detected detached first cellular bodies a detachment force; tracking the location of detected detached first cellular bodies during the transport of the detached cellular bodies to the sorting device; and, sorting the detached cellular bodies by controlling the sorting device based on the detachment force.

In a further aspect, the invention may relate to a system for cell sorting comprising: a flow cell comprising a holding space for cellular bodies; a cell sorting device connected to the flow cell; a force generator for applying a force to the cellular bodies; an imaging system capturing images of the cellular bodies in the flow cell; an image processing system for processing the captured images; a controller for controlling the flow cell and the cell sorting device; and, a computer readable storage medium having computer readable program code embodied therewith, and a processor, preferably a microprocessor, coupled to the computer readable storage medium, wherein responsive to executing the computer readable program code, the processor is configured to perform executable operations comprising: receiving images representing manipulation of first cellular bodies in a holding space of a flow cell, the flow cell including or being connected to a sorting device, the manipulation including: providing the first cellular bodies in the holding space to allow at least part of the first cellular bodies to contact a functionalized wall of the holding space; applying a force, preferably an acoustic force, to the contacted first cellular bodies in a direction away from the functionalized wall for detaching at least part of the first cells; and, transporting the detached cells to the sorting device for individually sorting the detached cells; processing the sequence of images during the manipulation of the first cells and controlling the sorting device based on the image processing, the processing and controlling including: detecting detachments of first cells in the images during the application of the force; determining for each detected detached first cell a detachment force; tracking the location of detected detached first cells during the transport of the detached cells to the sorting device; and, sorting the detached cells by controlling the sorting device based on the detachment force.

The module and system described above may be configured to execute any of the method steps described in this application.

The invention may also relate to a computer program or suite of computer programs comprising at least one software code portion or a computer program product storing at least one software code portion, the software code portion, when run on a computer system, being configured for executing any of the method steps described above.

The invention may further relate to a non-transitory computer-readable storage medium storing at least one software code portion, the software code portion, when executed or processed by a computer, is configured to perform any of the method steps as described above.

The invention will be further illustrated with reference to the attached drawings, which schematically will show embodiments according to the invention. It will be understood that the invention is not in any way restricted to these specific embodiments.

### Brief description of the drawings

**Fig. 1** depicts a schematic of a force spectroscopy system according to an embodiment of the invention;
**Fig. 2A** and **2B** schematically depict a flow cell for a force spectroscopy system according to an embodiment of the invention;
**Fig. 3** depicts a schematic of a typical experiment in a force spectroscopy system according to an embodiment of the invention;
**Fig. 4** depicts two cell avidity curves determined using a force spectroscopy system according to an embodiment of the invention;
**Fig. 5A-5E** depict a method of sorting single cells according to an embodiment of the invention;
**Fig. 6** depicts a method of sorting single cells according to an embodiment of the invention;
**Fig. 7A-7C** depict a method of determining an acoustic force map according to an embodiment of the invention;
**Fig. 8** depicts an example of a force map;
**Fig. 9A** and **9B** schematically depict a cell sorting scheme according to an embodiment of the invention wherein at least part of the cells is labelled;
**Fig. 10** depicts a sorting scheme according to an embodiment of the invention;
**Fig. 11** depicts a sorting scheme according to another embodiment of the invention;
**Fig. 12** depicts a sorting scheme according to yet another embodiment of the invention;
**Fig. 13** is a block diagram illustrating an exemplary data processing system that may be used for executing methods and software products described in this application.

### Detailed description

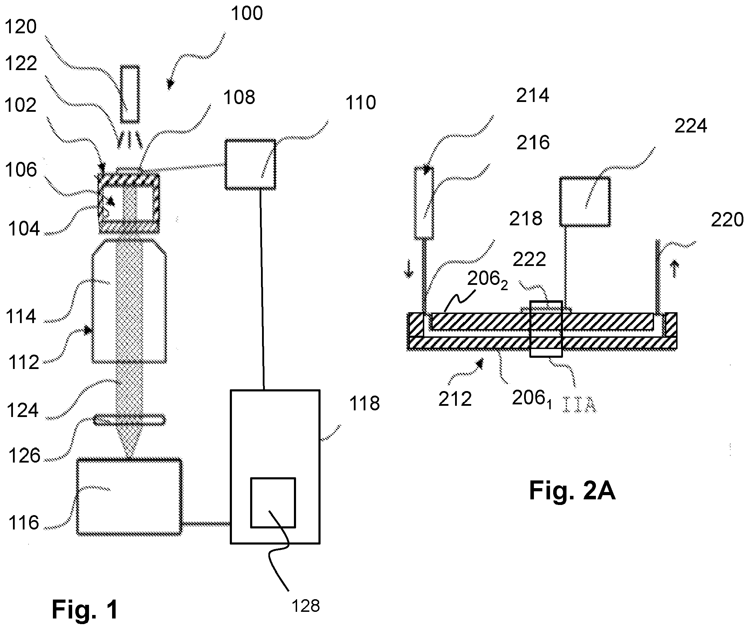

The embodiments below are intendent as non-limiting examples of the invention and although the embodiments are described with reference to cell sorting schemes, the embodiments are equality suitable for sorting any type of cellular body. **Fig. 1** schematically depicts a force spectroscopy system according to an embodiment of the invention. The force spectroscopy system **100** may comprise a sample holder **102** comprising a holding space **104** for holding a sample **106** for holding cellular bodies in a fluid medium, e.g. a liquid or a gel. The holding space may be part of a flow cell (also referred to as a microfluidic cell). Different flow cell architectures may be used to manipulate, e.g. insert, hold and remove cells. The system may further comprise a force field generator **108**, e.g. an acoustic wave generated based on a piezo element, connected to the sample holder **102** for generating a bulk acoustic wave in the holding space so that a force is exerted on cellular bodies that may be present in the holding space. The force field generator may be connected to a controller **110** so that the force exerted on the cellular bodies can be controlled.

The system of **Fig. 1** may further comprise an imaging system for imaging the processes in the holding space. The imaging system may include a microscope **112** including optics, e.g. adjustable objective **114**, and a camera **116** for capturing pictures, e.g. video frames, of the processes in the holding space. The imaging system may be connected to a computer **118** comprising a processor connected a memory comprising one or more software programs, which when executed, allow control of the different elements of the system.

The system may further comprise a light source **120** for illuminating the sample using any suitable optics (not shown) to provide a desired illumination intensity and intensity pattern, e.g. plane wave illumination, Köhler illumination, etc., known per se. Here, the light **122** emitted from the light source may be directed through the force field generator **108** to (the sample in) the sample holder **102** and sample light **124** from the sample is transmitted through the objective **114** and through an optional tube lens **126** and/or further optics (not shown) to the camera **116**. The objective and the camera may be integrated. In an embodiment, two or more optical detection tools, e.g. with different magnifications or different imaging modalities (e.g. bright field, dark field, fluorescence, etc.), may be used simultaneously for detection of sample light, e.g. using a beam splitter.

In another embodiment, not shown but discussed in detail in WO2014/200341, the system may comprise a partially reflective reflector and light emitted from the light source is directed via the reflector through the objective and through the sample, and light from the sample is reflected back into the objective, passing through the partially reflective reflector and directed into a camera via optional intervening optics. Further embodiments may be apparent to the reader.

The sample light may comprise light affected by the sample (e.g. scattered and/or absorbed) and/or light emitted by one or more portions of the sample itself e.g. by chromophores/fluorophores attached to the cellular bodies.

Some optical elements in the system may be at least one of partly reflective, dichroic (having a wavelength specific reflectivity, e.g. having a high reflectivity for one wavelength and high transmissivity for another wavelength), polarisation selective and otherwise suitable for the shown setup. Further optical elements e.g. lenses, prisms, polarizers, diaphragms, reflectors etc. may be provided, e.g. to configure the system **100** for specific types of microscopy.

The sample holder **102** may be formed by a single piece of material with a channel inside, e.g. glass, injection moulded polymer, etc. (not shown) or by fixing different layers of suitable materials together more or less permanently, e.g. by welding, glass bond, gluing, taping, clamping, etc., such that a holding space **106** is formed in which the fluid sample is contained, at least during the duration of an experiment. While, the force spectrometry system of **Fig. 1** includes an acoustic force generator, other ways of applying a pulling force on the cells may be used as well. For example, a force spectrometry system may use a centrifugal force generator for applying a force on the cells. Such force spectrometry system is e.g. known from US2016/0243560.

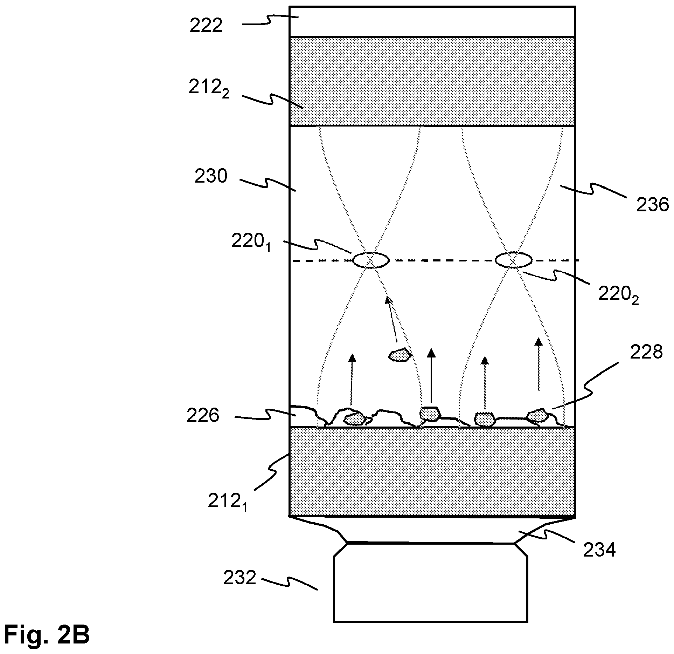

**Fig. 2A** and **2B** schematically depict cross-sectional views of a flow cell for a force spectroscopy system according to an embodiment of the invention. The sample holder **212** may comprise a first base part **206₁** that has a recess being, at least locally, U-shaped in cross section and a cover part **206₂** to cover and close (the recess in) the U-shaped part providing an enclosed holding space in cross section.

Further, the sample holder **212** may be connected to a fluid flow system **214** for introducing fluid and unbound cells into the holding space **206** of the sample holder and/or removing fluid from the holding space, e.g. for flowing fluid through the holding space (see arrows in **Fig. 2A** depicting the flow direction). The fluid flow system may be comprised in or part of a manipulation and/or control system including one or more of reservoirs **216**, pumps, valves, and conduits **218** for introducing and/or removing one or more fluids, sequentially and/or simultaneously. The sample holder and the fluid flow system may include connectors, which may be arranged on any suitable location on the sample holder, for coupling/decoupling. In **Fig. 2A** only a single entry and single exit channel for the fluidics system are shown but as will be apparent from the descriptions below multiple entry and exit channels may be provided and/or separately controlled. Examples of flow cells with multiple channels are described hereunder in more detail. Additionally, the flow cell may include a cell sorting device that is configured to sort cells. The sample holder may further include a force field generator **222**, e.g. an acoustic wave generator which may be implemented based on a (at least partially transparent) piezoelectric element connected to a controller **224**.

**Fig. 2B** schematically depicts a cross-section of part of the sample holder including objective **232** that is positioned underneath part of a sample holder (a chip) wherein the sample holder may comprise a capping layer **212₁**, a matching layer **212₂**, a fluid medium **230** contained in the holding space formed by the capping and the matching layer, and part of a force generator **222**, e.g. a piezo element. An immersion liquid **234** between the objective and the capping layer may be used to improve the optical numerical aperture (NA) of the imaging system. Application of an AC voltage to the piezo element at an appropriate frequency will generate a resonant bulk acoustic standing wave **236** in the sample holder. The standing wave will have nodes **220_{1,2}** in the fluid layer at a certain height (this height may be referred to as the nodal plane here indicated with a dashed line) above the functionalized wall comprising target cells **226** attached to the wall of the sample holder and effector cells **228** that are bound to the target cells. Cells that have a positive acoustic contrast factor with respect to the fluid medium will experience a pulling force towards to the nodes.

One or more software programs that run on the computer **118** of the force spectroscopy system may be configured to control the camera, the force field generator, the fluidics system and the flow cell to conduct different experiments, including force spectroscopy and single cell sorting. In a typical experiment, cells, e.g. effector cells, may be flushed into the holding space of the flow cell and may interact, e.g. bind, with the target cells. This interaction can be probed by analysing the response of cells that are bound to target cells as a function of the force applied. Typically, the response of the cells is determined by analysing video frames that are captured by the camera. To that end, the computer may include an image processing module **128** comprising one or more image processing algorithms for analysing the response of the cells when they are manipulated in the flow cell using the force field generator. In particular, the image processing module may be configured to identify cells in the images and track locations of identified cells in subsequent images. This information may be used by the controller to control the flow in one or more channels for transporting detached cells, e.g. transporting cells in or out the holding space. Further, this information may be used by the controller to control other devices, such as e.g. a sorting device for sorting cells that detach due to the application of a force. The image analysis of the video frames and the use of the information derived from the image analysis are described hereunder in greater detail.

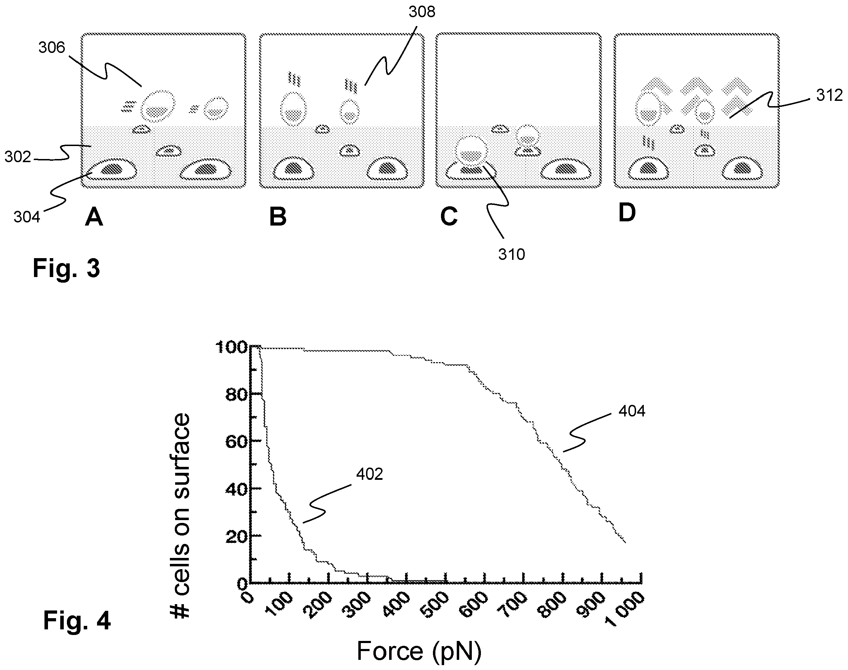

**Fig. 3A-3D** depict schematics of manipulating cells in a holding space of a microfluidic cell comprising a functionalised wall surface to which target cells are attached. Such functionalized wall surface may form a cell assay. The microfluidic cell may be part of a force spectroscopy system as described with reference to **Fig. 1** and **2**. The manipulation of the cells may be imaged from below or from the top using an imaging system as described with reference to **Fig. 1**. As depicted in **Fig. 3A**, the process may start with flushing a predetermined number of cells **306**, e.g. effector cells, into the holding space of the microfluidic chip, comprising a functionalized wall **302** including target cells **304**,. The introduction of the cells into the holding space may take a predetermined period of time, e.g. between 1 and 5 seconds. After flushing, the cells are allowed to settle onto the functionalized wall comprising the target cells **(****Fig. 3B****)**. When the effector cells reach the functionalized wall, the cells may move around over the functionalized surface until they find a suitable target cell to bind to (surveillance) thus forming a bound effector - target cell pair **310 (****Fig. 3C****)**. The steps of effector cells settling onto the functionalized wall and binding to target cells may be referred to as the incubation phase. In a typical experiment, incubation may take up to 1-15 minutes or longer.

After the incubation phase, a pulling force may be applied to the effector cells that are bound to the target cells. The force has a direction away from the functionalized wall surface. Typically, a force ramp will be applied to the effector cells, so that if the force becomes larger than the binding force, effector cells will detach from the target cells and move away in the direction of the force **(****Fig. 3D****)**. As the target cells are bound firmly to the functionalized wall, the force will "pull" the effector cells from the target cells and move the effector cells away from the functionalized wall surface. Pulling the effector cells from the target cells may be visible in the images and detected by the image processor based on a change of contrast, brightness, a movement of a group of pixels, etc. Such an event may be referred to as a detachment event. Based on further spatio-temporal behaviour of the effector cells, detachment events may be further filtered and/or classified as needed.

When the pulling force is larger than the binding force, the effector cell will detach from the target cell and move in a direction that depends on the applied force, which may have a component perpendicular to the functionalized wall (e.g. the z-direction) and two components in the plane of the functionalized wall (e.g. the x and y direction). The location in the image in which a detachment event may be detected can be determined on the basis of the images (video frames) which are captured during the experiment. The time at which cells detach may determine the force that is exerted on the effector cells. In a typical experiment, the force ramp may take between 2- 10 minutes.

Based on a measurement scheme as described with reference to **Fig. 3**, various parameters of the effector cells can be determined. For example, **Fig. 4** depicts two cell avidity curves which may be determined by applying a force ramp to the functionalized wall surface and determining the number of attached cells as a function of the applied force. Based on the type of effector cells, cells may exhibit a low cell avidity curve **402** (weak binding forces between effector and target cells) or a high cell avidity curve **404** (strong binding forces between effector and target cells). These parameters may then be used in single cell sorting schemes that are described below in more detail.

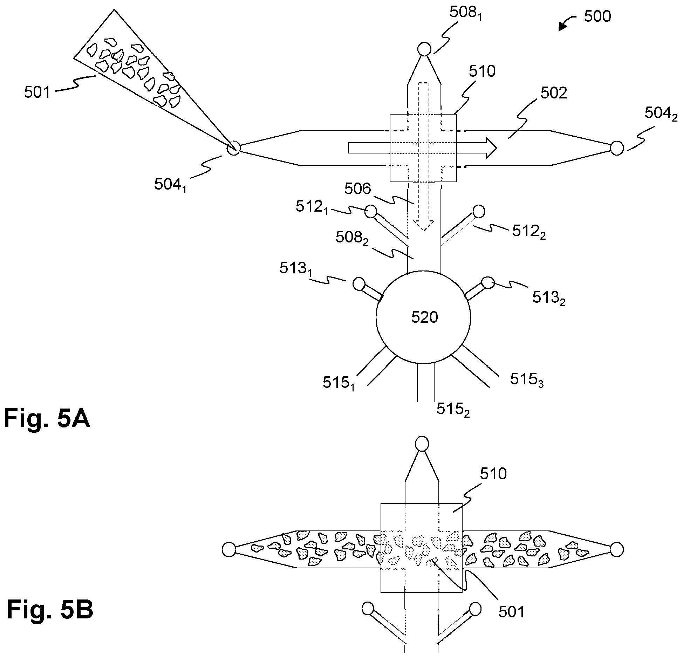

**Fig. 5A-5E** depict a method of sorting single cells according to an embodiment of the invention. In particular, **Fig. 5A** depicts an example of a flow cell architecture that may be used to sort single cells based on a detachment force. As shown in the figure, the flow cell **500** may include a first channel **502** including an input and an output **504_{1,2}** and a second channel **506** including an input and an output **508_{1,2}**. The output of the second channel may be connected to a cell sorting device **520.** The first and second channel may cross each other at a cross-section, which may define an acoustically active part **510** of the holding space that as indicated by the square in the figure. This flow cell configuration may be used to execute a cell manipulation process which includes exerting a force to cells that are bound to a functionalized wall in a holding space of the first flow channel as e.g. described with reference to **Fig. 3**. Cells will detach from the functionalized wall surface at a certain detachment force. The cell manipulation process may include transporting the detached cells via the second flow channel to a sorting device **520** to sort the detached cells based on the detachment force or a parameter associated with the detachment force, such as the detachment time and/or detachment location . The manipulation of the cells in the flow cell may be captured by a camera and images may be processed and analysed in real-time and based on the information in the images, the flow cell and a sorting device (not shown attached to the flow cell may be controlled.

The output side of the second channel may include (or be connected to) a sorting device that is configured to sort cells on the single cell level. To that end, in some embodiments, the output side of the second channel may include means to focus detached cells originating from the holding space into a stream of single cells. For example, in an embodiment, the walls of the output side of the second channel may include flow outlets **512**_{**1**,**2**}, which may be controlled to realize a laminar sheath flow along the walls of the channel. As will be described hereunder in more detail, this laminar sheath flow may be used to manipulate and transport cells at single cell level. Alternatively, for example, a tapered channel could also be used to focus cells into a single line. The cell sorting device **520** may include means to move a cell into one of a plurality of reservoirs based on sorting criteria. For example, in case of a fluidic sorting device, the sorting device may include auxiliary flow inlets **513_{1,2}** to move a cell into one of a plurality of reservoirs / exit channels **515_{1,2,3}**. The article by Choi et al., Microfluidic deformability-activated sorting of single particles, Microsystems & Nanoengineering, 6, article number: 11 (2020) describes an example of such fluidic sorting device. By opening and closing valves that control the flow through the auxiliary flow inlets **513₁** and **513₂** cells can be forced to exit through exit channels **515₁, 515₂** or **515₃.** If both **513₁** and **513₂** are open and the flux through these channels is similar the hydrodynamic flow causes cells to exit through exit channel **515₂**. If **513₁** is closed and **513₂** is open, then the cells are pushed sideways to the left and exit through channel **515₁**. If **513₁** is open and **513₂** is closed, then the cells are pushed to the right side and exit through channel **515₃**.

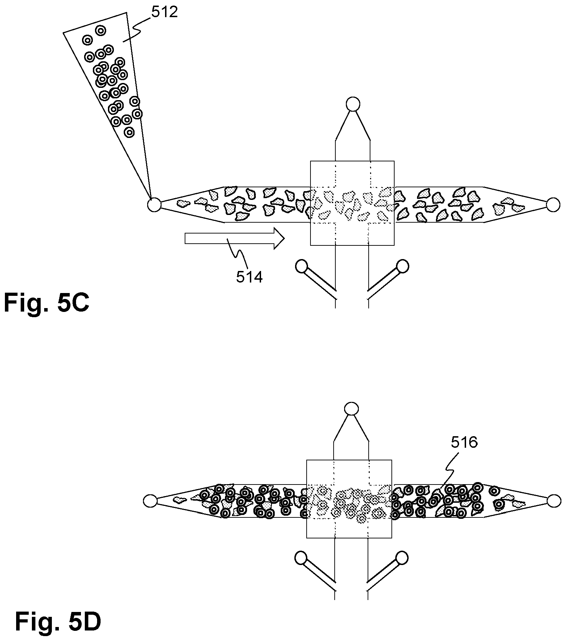

The input and output of the first channel may be used to create a flow through the first channel allowing first cells **501**, target cells, to enter the first channel and to settle onto a wall surface to which the target cells will attach. This situation is depicted in **Fig. 5B**, wherein the wall of the first channel forms a functionalized wall comprising the target cells. This way, the first channel will form a holding space for the target cells. As shown in the figure, at least part of the functionalized wall will be located within the acoustically active part of the holding space. Preferably the target cells are attached strongly enough to the wall surface to withstand the forces later used to detach the effector cells. A further step is depicted in **Fig. 5C**, wherein the input and output of the first channel are used to control a flow **514** through the channel allowing second cells, effector cells **512**, to enter the first channel and to allow the effector cells to settle onto the functionalized wall of the first channel, including the acoustically active area part of the first channel. During the settling and / or incubation phase, free effector cells may attach to the target cells. Here settled cells on the wall surface are indicated as darker circular bodies. Thus a sample of effector cells bound to target cells can be prepared as depicted in **Fig. 5D**.

Thereafter, a force may be applied to the settled cells in the acoustically active part of the channel, so that at least some of the attached cells may detach in a way as explained with reference to **Fig. 1-3**. The force applied to the cells may be gradually increased so that cells that are attached with different binding forces to the target cells may detach at different times. During or after detachment, a flow **507** through the second channel may be controlled to transport detached cells in a direction to the sorting device **520**.

In this example, the second channel may be used to transport detached cells **518** in the direction of the sorting device **520,** which is configured to sort each cell based on the detachment force or a parameter associated with the detachment force. In some embodiments, during transport towards the sorting device, cells may be manipulated into a stream of single cells so that at each time instance one single cells can be processed (sorted) by the sorting device. Another effect of manipulating the cells into a single stream is that the cells will have a predetermined order in the stream. Thus, once the order of the cells in such a stream has been established (for example by an image processing algorithm). The sorting device can sort cells based on a known ordering of the cells without the need for real-time (low-latency) interaction between the image processing algorithm and the sorting device.

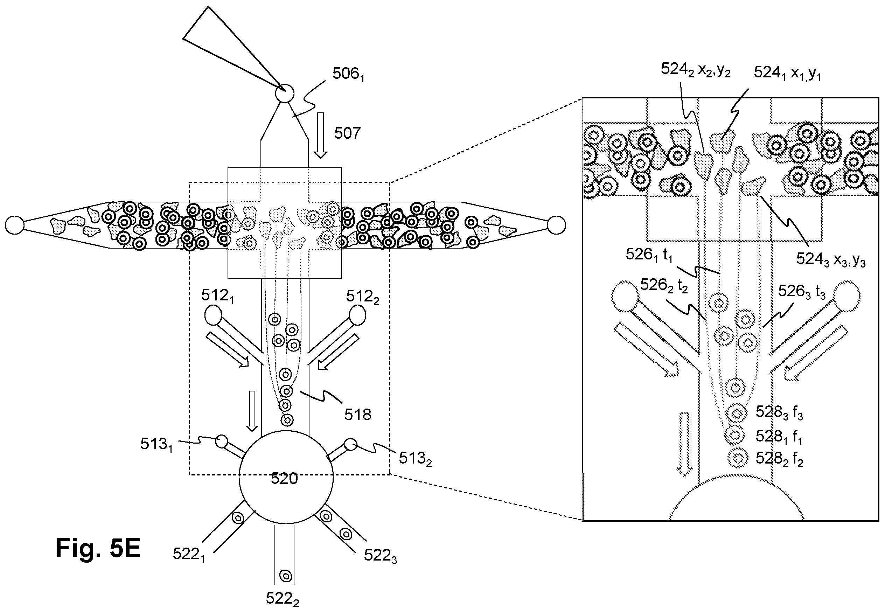

During the settling of the effector cells, cells will attach to the functionalized wall space at different locations in the holding space. Further, cells may interact with the functionalized wall cell differently. Therefore, during the application of the force, cells will detach at different detachment times and at different detachment locations in the acoustically active area. This will result in cells **518** which detach at different times and different locations from the functionalized wall and which are transported via different trajectories via the second channel to the sorting device. This is schematically illustrated in the inset of **Fig. 5E**, showing trajectories t₁₋₃ **526₁₋₃** of detached cells moving through the second channel having different detach locations X₁₋₃ **524₁₋₃** and different detachment forces **528₁₋₃** f₁₋₃ (or different detach times).

In order to allow single cell sorting by the sorting device based on the detachment force, the detachment event should not only be detected, but the location of the detachment event and at least part of a trajectory of the detached cell moving through the holding space should be determined. To that end, the image processor should be able to detect detached cells and to track the location of detached cells.

A cell detection method for detecting detachment events may include a background correction method that allows removal of the background, i.e. the functionalized wall including the target cells, from the captured images so that foreground objects can better distinguished from the background. A filter, such as a Laplacian or Gaussian filter, may be applied to the background corrected images for blurring high frequency information in the image. The intensity of the pixels may be cropped to improve the black and white saturation. This step may be applied to ensure that the blobs in the processed image have sufficient contrast with respect to the background so that the blobs can be detected using a segmentation method. Further, a known thresholding operation, preferably a local thresholding operation, may be used to create a binary image, wherein blobs are formed by pixels having a first value and the background is formed by pixels having a second value. Blobs that contain "holes" due to irregularities or noise may be processed so that these holes are removed by filling each of these holes with pixel values. The location of the blobs in the image may be determined and the blob can be classified as a detached or attached cell. Optionally, the blobs may be classified as detached cell based on proximity, size, intensity, area, symmetry, etc.

During a force ramp up cells may be detected, localized and classified as detached or attached in images captured by a camera using the above-described method. Further, locations and trajectories of detected cells in subsequent images may be determined by linking locations for subsequent frames using a minimization algorithm, preferably a global minimization algorithm. For example, to efficiently link large numbers of detected cells in subsequent images a minimization of a cost function may be used as described in the article by Jaquaman et al, Robust single-particle tracking in live-cell time-lapse sequences, Nature Methods, Vol. 8, no. 8, August 2008, pp. 295-702.

Alternatively, locations and trajectories of detected cells in subsequent images can be determined by following the location of detected particles in subsequent images. For example by updating the previous location by the new center of mass of the displaced blob or using a correlation to find the updated location, as described in the article by Cheezum et al, Quantitative comparison of algorithms for tracking single fluorescent particles Biophysical journal 81.4 2008, pp. 2378-2388. The trajectories will generate tracking paths from the active acoustic area towards the sorting device as illustrated in **Fig. 5E****.** These tracking paths can be used to classify cells based on a detachment force or on parameters associated with detachment events This information may be stored by the computer and used to control the sorting device.

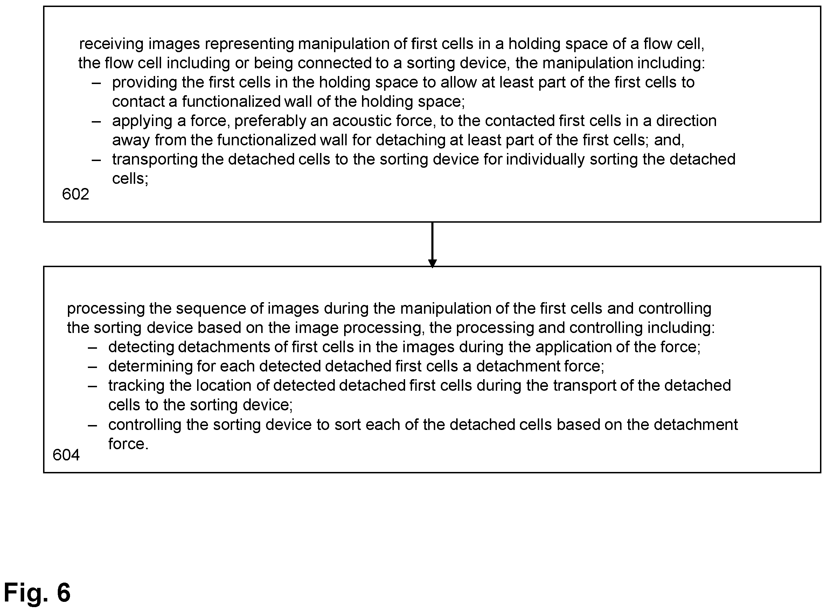

**Fig. 6** depict a flow chart of a method of sorting single cells according to an embodiment of the invention. As shown in the figure, the method may be executed by a computer that controls a force spectroscopy system as described with reference to **Fig. 3**.

The method may include receiving images representing manipulation of first cells in a holding space of a flow cell (step **602),** wherein the flow cell includes or is connected to a sorting device for sorting cells. The manipulation of the cells may include: providing the first cells in the holding space to allow at least part of the first cells to contact a functionalized wall of the holding space; applying a force, such as an acoustic force, to the contacted first cells in a direction away from the functionalized wall for detaching at least part of the first cells; and, transporting the detached cells to the sorting device for individually sorting the detached cells.

Further, the method may include processing the sequence of images during the manipulation of the first cells and controlling the sorting device based on the image processing (step **604)**, wherein the image processing and the controlling of the sorting device may include: detecting detachments of first cells in the images during the application of the force; determining for each of the detected detached first cells a detachment force; tracking the location of detected detached first cells in the images during the transport of the detached cells to the sorting device; and, controlling the sorting device to sort each of the detached cells based on the detachment force.

The sorting device is configured to individually sort detached cells based on at least the detachment force, for example the force at which an effector cell will detach from the functionalized wall, and possibly based on one or more further parameters, which may be determined during the manipulation of the cells in the flow cell. During the settling of the effector cells however, cells will attach to the functionalized wall space at different locations in the holding space. Hence, the length of the path (the trajectory) for detached cells to the sorting device will differ. Moreover, as will be described hereunder in greater detail, the force applied to cells may not be homogeneous throughout the holding space. This means that a force that an attached cell experiences may depend on the location in the holding space at which the cell is attached. Due to the differences in trajectories and forces, typically detached cells will not arrive at the sorting device in order of detached force.

To address these problems, when applying a force to the attached cells, the image processing module may detect cell detachment events. Each detected event may include detection of a detached cell and association of an identifier and coordinates x,y to each detected detached cell. Further, for each detached cell a detachment force may be determined as e.g. described with reference to **Fig. 3** and **4**. This information may be stored in a memory of the computer. Thereafter, when the detached cells are transported to a sorting device and, in some embodiments, manipulated into a stream of single cells, the location of each detached cell is tracked. This way, for each detected detached cell a trajectory t through part of the flow cell, in this example a trajectory from the holding space towards the sorting device, can be determined. Thus, when a cell arrives at the sorting device, the computer knows at which time and at which location in the holding space the particle detached from the functionalized wall space, along which trajectory the cell was transported through the flow cell and the detachment force. The controller of the sorting device may use this information to determine how the cell should be classified and sorted accordingly.

Hence, based on the sorting method described above, single cells can be sorted based on a detachment force or a parameter associated with the detachment event, e.g. a detachment time and/or a detachment location, which was determined prior to the sorting process. This way, cells can be accurately sorted based the detachment force and, optionally, other parameters. The flow cell design in of **Fig. 5****,** that includes a holding space formed at the position where flow channels cross each other is particular suitable for such sorting schemes. As shown in the figure, transporting detached cells out of the acoustically active area of the holding space via a clean contamination free second flow channel will not affect other parts of the functionalized wall surface in the first channel. This way, contamination of the second channel with cells or debris of other parts of the functionalized wall surface can be minimized.

It is submitted that the scheme depicted in **Fig. 5** is only a non-limiting example to illustrate the advantages of the inventions. Many other variants exists without departing from the invention. For example, different flow cell designs, cell focussing means and sorting devices may be used for cell sorting schemes according to the invention. Examples will be described below.

As explained above, the holding space of a flow cell may have an inhomogeneous force distribution. In that case, to estimate the detachment force f of particle p, the system may use the particle detachment location x and a force map of the sample holder (f(t, x)) to determine a corrected detachment force which takes into account the inhomogeneities in the applied force.

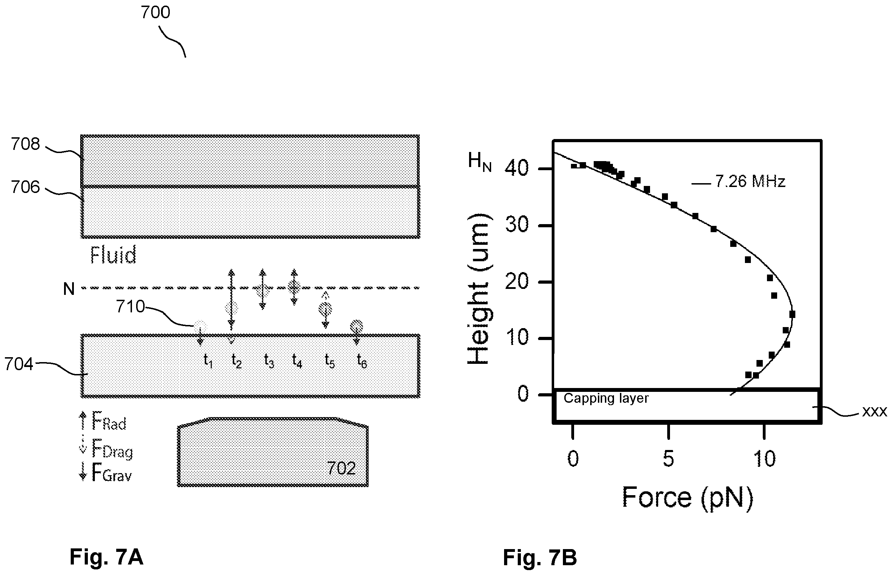

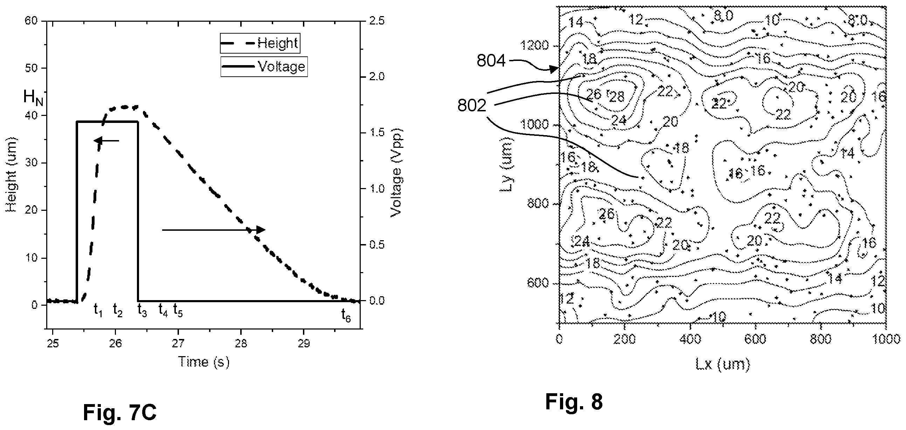

**Fig. 7A-7C** depict a method of determining an acoustic force map according to an embodiment of the invention. It has been found that, in practice, the acoustic force may not be distributed evenly over the holding space but that local force variations may occur. For example, forces at the edges of the holding space may be smaller than forces in the centre. The figure illustrates a method to characterise such variations in force. **Fig. 7A** shows a cross-section of a sample holder 700 including a microscope objective **702** and a liquid filled holding space formed between a capping layer **704** and a matching layer **706** as e.g. described with reference to **Fig. 2B**. In the sample fluid a schematic of a test particle **710** moving subject to an acoustic force burst and forces in the direction perpendicular to the surface of the capping layer that act on the particle in (six) different time instances *t₁...t₆.* **Fig. 7B** shows the acoustic force as a function of height in the holding space between the surface of a wall of the sample holder (height = 0) and a node at height *H_{N}* during the acoustic burst and measured particle positions. **Fig. 7C** shows the temporal behavior of the driving signal burst Vpp (right axis) and the height of a particle in a sample holder (left axis).

At time instance *t₁*, no acoustic force is applied and the particle is at rest on the surface of the wall of the sample holder (marked capping) under the influence of the net downward forces of gravity and buoyancy *F_{Grav}* + *F_{buoy}.* Then at time instances *t₂*-*t₃*, an acoustic wave is generated in the sample holder providing a burst of acoustic force *F_{Rad}* driving the particle away from the surface towards the node (cf. **Fig. 2B**). When moving, the particle is now also subject to a drag force *F_{Drag}* counteracting the movement and *F_{Rad}* > (*F_{Grav}* + *F_{buoy}*) As long as the total force on the particle is positive [*Fₜₒₜ* = (*F_{Grav}* + *F_{buoy}*) + *F_{Drag}* + *F_{Rad} >* 0] the particle accelerates upward. The drag force *F_{Drag}* may be velocity dependent (assuming a spatially and temporally homogeneous sample fluid) and this quickly balances the other forces and the particle keeps moving at a constant velocity [*Fₜₒₜ* = (*F_{Grav}* + *F_{buoy}*) + *F_{Drag}* + *F_{Rad}* = 0] . Furthermore, the acoustic force *F_{Rad}* is height dependent, see **Fig. 7B****.** At time instance t₄, the acoustic wave and hence the acoustic force is still present, but the particle has come to rest close to the node N; *F_{Drag}* = 0 and *F_{Rad}* = (*F_{Grav}* + *F_{buoy}*). At time instance *t₅,* the driving signal is stopped, so that the acoustic wave and hence the acoustic force are absent. The particle now falls back to the wall, counteracted by the drag force *F_{Drag}.* (*F_{Grav}* + *F_{buoy}*) *> F_{Drag}* and *Fₜₒₜ* = (*F_{Grav}* + *F_{buoy}*) + *F_{Drag} <* 0 (i.e.: downward). Finally, at time instance *t₆* no acoustic force is applied and the particle is again at rest on the surface of the wall of the sample holder (the capping layer) under the influence of the net downward forces of gravity and buoyancy *F_{Grav}* + *F_{buoy}.*

The displacement of the particle may be detected via the microscope using known image capturing techniques including video and/or other time-resolved methods (e.g. methods such as described in WO 2014/200341). The spatiotemporal displacement properties of the particle through the sample fluid may be determined on the basis of the Navier-Stokes equations for the specific particle shape and size in combination with the properties of the fluid in the holding space. By detecting the displacement velocity of the particle, the acoustic force may be determined. Note that the same force determination may hold for any lateral displacement of the particle.

**Fig. 7B** shows that an acoustic model (solid line) for a force on the test particle may be fitted to the data. This allows one or more of interpolation, extrapolation and determination of the force at any specific height between the capping layer and the node. Using a repeating, possibly periodic, driving signal and possibly a small lateral force in one or two directions parallel to the surface and/or perpendicular to the direction of the acoustic force, an acoustic force at many different positions in the holding space distributed in one or two directions perpendicular to the acoustic force direction may be determined. The thus determined force values may be used to determine a force map of the active region of the holding space. Preferably, by probing many test particles in parallel a force map may be acquired more quickly.

An example of such force map is depicted in **Fig. 8** wherein black dots show a large number of spatially distributed test particles **802** in a holding space (viewed from the top). In this example, a 1x PBS (Phosphate-buffered saline) solution supplemented with 0.02% w/v Pluronic f127 plus 0.02% w/v Casein solution was used as a sample fluid. The sample temperature was kept in a range of 25-37 degrees Celsius, and the particles were silica beads of ca 10.1 micrometer diameter (standard deviation 0.1 micrometer). Using a single driving signal burst / acoustic force burst as indicated with respect to **Fig. 7A-7C****,** the force on all test particles may be probed simultaneously, allowing establishing a force map exposing local force variations. Using a repeating, possibly periodic, driving signal more data may be obtained and the map may become even more accurate and/or detailed. Given sufficient homogeneity of the test particles, statistical information like averages, standard deviations of and/or local patterns and/or global patterns in the force distribution may be simply determined, otherwise averages and pattern may be (or: may have to be) calculated on the basis of results calculated independently for each of plural particles to be included in the determination of the average and/or the pattern.

The contour lines **804** in **Fig. 8** indicate curves in the 2D plane for which the force on a test particle at a given power applied to the acoustic generator is the same. The numbers indicate relative forces on the test particles. A force map as shown in **Fig. 8** has proven to be largely sample holder specific and largely constant over time and may be stored in a memory associated with a sample holder identifier and/or a chip identifier. Other parameters such as temperature and sample medium may also affect the force map and maybe also taken into account.

Thus, by tracking the particles or cells from the moment of detachment to the point at which they are sorted, the force map can be used to determine a corrected detachment force for each cell based on which the cells may be sorted. It is noted that for the sake of simplicity in the above discussion it is assumed all particles are similar in terms of acoustic contrast, size and shape such that for a given acoustic pressure gradient they experience the same force. In practice particle properties may differ and if known or measurable these properties can also be taken into account for determining a detachment force and/or for sorting the cells.

In an embodiment, cells are unlabeled cells. Hence, in that case, image detection and tracking of the cells in the flow cell may be based on images of the cells in the flow cells produced by brightfield microscopy. An example of such imaging detection and tracking process is described in pending Dutch application NL 2024155, with title *Determining interactions between cells based on force spectroscopy.* another embodiment, some or all cells are labelled cells using a suitable fluorescent label. In that case, the image detection and tracking of the cells in the flow cell may be based on images of the cells in the flow cells produced by fluorescent microscopy.

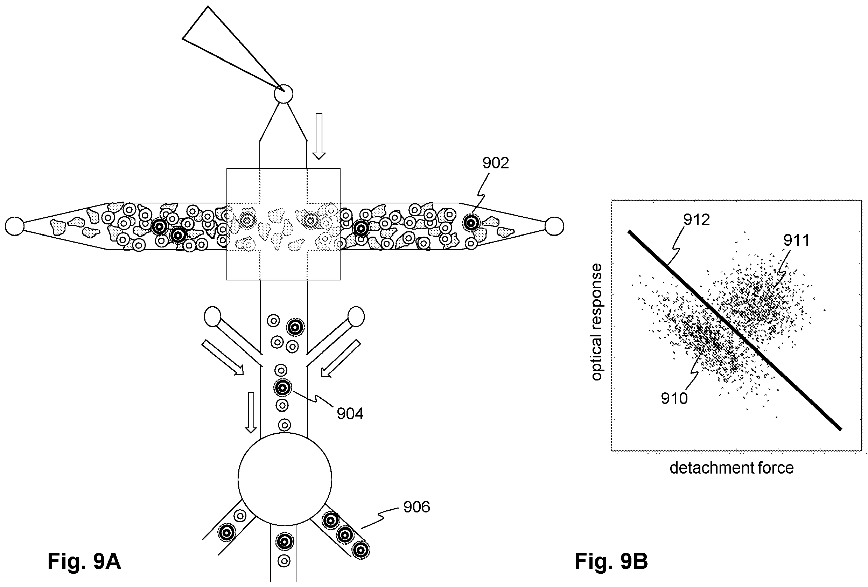

**Fig. 9A** and **9B** schematically depict a cell sorting scheme according to an embodiment of the invention wherein at least part of the cells are labelled. As shown in **Fig. 9A****,** the sample in the first channel may be prepared with effector cells, that are labelled or at least partially labelled **902**. During the force spectroscopy, detached effector cells may be tracked and sorted by the sorting device based on the detachment force and the optical response of the label. The imaging system may be a fluorescence imaging system, a multi-color imaging system, a multimodal imaging system, etc. and the labelled or unlabelled cells may have any combination of different optical characteristics. These optical characteristics may be further taken into account in controlling the sorting device and sorting of the particles into any number of desired fractions. In this example, for example, all cell which are fluorescent and have detachment forces over a certain threshold are sorted into the right exit channel of the sorting device while non-fluorescent particles and also particles with detachment forces below the set threshold are sorted into the other two exit channels. This way, cells can be separated based on two of more different parameters, including the detachment force (or a parameter associated with the detachment force) and e.g. the optical response of the cells as e.g. depicted in **Fig. 9B**. As can be seen from figure **9B** sorting cells according to at least two parameters (2D sorting) may allow different clusters of cells do be differentiated that are not clearly differentiated based on either detachment force or optical response alone. In this example there are two clusters of cells **(910** and **911** ) that can be identified in the 2D plot based on whether the data points belonging to the cells fall above or below the classification line **912**.

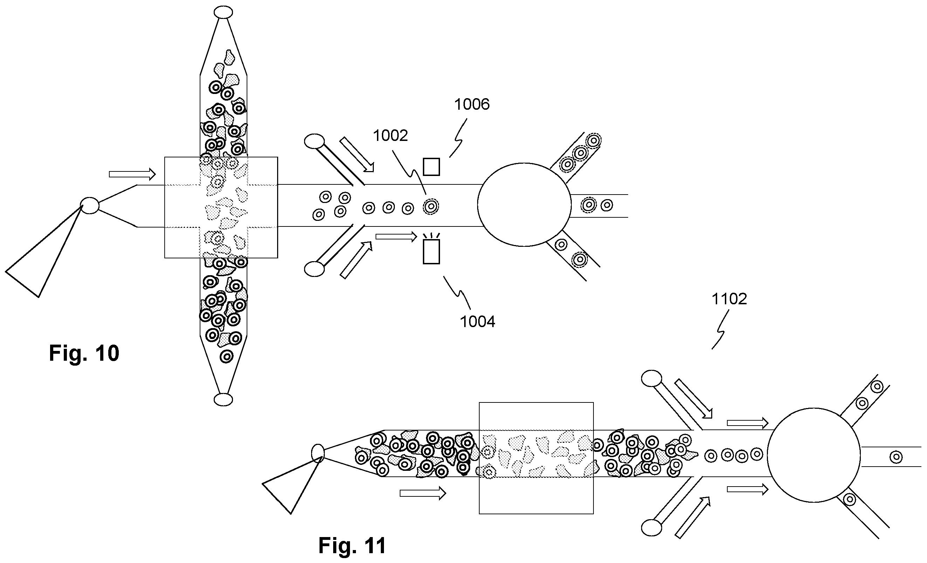

**Fig. 10** illustrates a sorting scheme according to a further embodiment of the invention. In this embodiment, a flow cell system may be used that is similar to the one described with reference to **Fig. 5**. However, in this embodiment, after the focusing junction, but before the sorting device, a light source **1004** may be used to illuminate a tracked, detached cell **1002** in the channel and a detector **1006** (e.g. observing on the opposite side of the channel or under a 90 degree angle) may be configured to detect the transmitted, scattered and/or emitted light. The cells are tracked from the holding space at least to the focusing junction wherein the velocity of the cells in the channel may be set by setting the flow speed in the channel. The individually measured force parameters can now be linked to the optical parameters (such as for example fluorescence intensity) also without the need of complex fluorescence imaging in the holding space. It may be apparent to the reader that such a serial optical interrogation can be easily multiplexed to, for example, many different fluorescence colors and/or different scattering measurements. All these parameters can be considered by the controller to control the sorting device and to sort cells with similar properties into the same receiving container. This way multidimensional measurement and sorting can be achieved.

**Fig. 11** depicts another variant wherein the flow cell is based on a linear flow cell that includes focussing and sorting functionality as described with reference to the embodiments in this application. Hence, in this embodiment, the flow cell does not comprise side channels.

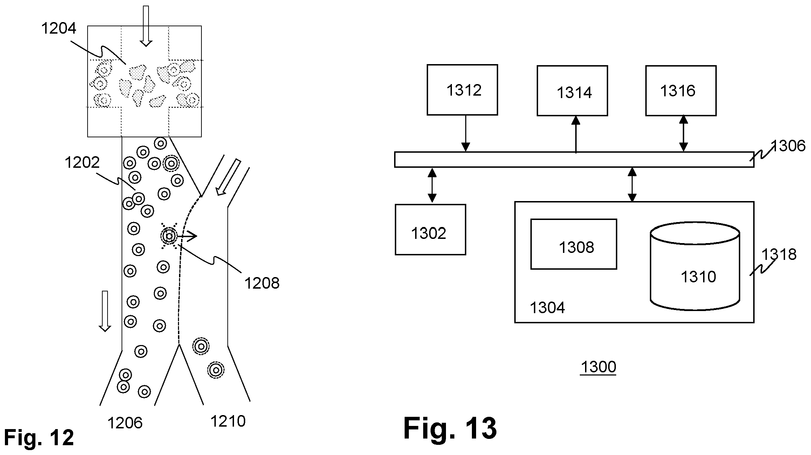

**Fig. 12** schematically depicts a cell sorting scheme according to another embodiment of the invention. In this embodiment, a single cell sorting method is used that does not necessarily require a focusing mechanism to manipulate the tracked cells into a single cell stream as e.g. described with reference to **Fig. 5A-5E****.** Alternative sorting methods may be implemented that are based on parallel instead of serial sorting methods and therefore do not require focusing of cells into a single line. For example, in an embodiment, optical tweezers may be used to pick specific cells from one location and move it to another where it can be further separated based on any standard microfluidic method. An example of such sorting method is described by Zhang and Liu in Optical tweezers for single cells Hu, Interface, J. R. Soc. Interface (2008) 5, 671-690*).*

The figure depicts a part of a flow cell comprising a stream of detached cells **1202** originating from a holding space **1204.** The detached cells may be tracked and transported via a first laminar flow channel **1206** towards a sorting device comprising one or more optical trapping beams **1208** (drawn as two hourglass shaped dashed lines to indicate a focused laser beam). A controller may use the information on the position and detachment force of a predetermined detached cell and the measured detachment force to pick a predetermined cell from the first laminar flow channel and move it into another second (parallel) flow channel **1210**. The boundary between the laminar flow channels is indicated as a dashed line.

The first channel may be a channel directly coming from the holding space carrying detached cells. The second channel may for example be a channel which is flushed with clean buffer solution. Thus, detached particles are tracked from the point (moment and location) of detachment to the sorting area where the trap can be controlled to pick out and sort particles based on any combination of detachment force and other parameters. This may be achieved using one fast moving optical trap, e.g. using acousto-optical deflectors, or alternatively using many parallel traps, for example using holographic optical tweezers also described by Zhang and Liu).

Yet another alternative technology that allows sorting of specific cells after they have been detached in the holding space relates to a sorting scheme described in US7612355. In this scheme, a light projection system and photoconductive materials in a microfluidic device may be used to apply forces on particles or cells using dielectrophoresis.

**Fig. 13** is a block diagram illustrating exemplary data processing systems described in this disclosure. Data processing system **1300** may include at least one processor **1302** coupled to memory elements **1304** through a system bus **1306**. As such, the data processing system may store program code within memory elements **1304**. Further, processor **1302** may execute the program code accessed from memory elements **1304** via system bus **1306**. In one aspect, data processing system may be implemented as a computer that is suitable for storing and/or executing program code. It should be appreciated, however, that data processing system **1300** may be implemented in the form of any system including a processor and memory that is capable of performing the functions described within this specification.

Memory elements **1304** may include one or more physical memory devices such as, for example, local memory **1308** and one or more bulk storage devices **1310.** Local memory may refer to random access memory or other non-persistent memory device(s) generally used during actual execution of the program code. A bulk storage device may be implemented as a hard drive or other persistent data storage device. The processing system **1300** may also include one or more cache memories (not shown) that provide temporary storage of at least some program code in order to reduce the number of times program code must be retrieved from bulk storage device **1310** during execution.

Input/output (I/O) devices depicted as input device **1312** and output device **1314** optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter **1316** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system **1300**.

As pictured in **FIG. 13**, memory elements **1304** may store an application **1318**. It should be appreciated that data processing system **1300** may further execute an operating system (not shown) that can facilitate execution of the application. Application, being implemented in the form of executable program code, can be executed by data processing system **1300,** e.g., by processor **1302**. Responsive to executing application, data processing system may be configured to perform one or more operations to be described herein in further detail.

In one aspect, for example, data processing system **1300** may represent a client data processing system. In that case, application **1318** may represent a client application that, when executed, configures data processing system **1300** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **1318**, when executed, may configure data processing system to perform (HTTP) server operations. In another aspect, data processing system may represent a module, unit or function as referred to in this specification.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope of the invention. The embodiment was chosen and described in order to best explain the principles of the invention and the practical application, and to enable others of ordinary skill in the art to understand the invention for various embodiments with various modifications as are suited to the particular use contemplated.

## Claims

1. A method for sorting cellular bodies comprising:
receiving images representing manipulation of first cellular bodies (501) in a holding space of a flow cell (500), the flow cell including or being connected to a sorting device (520), the manipulation including: providing the first cellular bodies in the holding space to allow at least part of the first cellular bodies to contact a functionalized wall of the holding space; applying a force, preferably an acoustic force, to the contacted first cellular bodies in a direction away from the functionalized wall for detaching at least part of the first cellular bodies; and, transporting the detached cellular bodies to the sorting device for sorting the detached cellular bodies;
processing the sequence of images during the manipulation of the first cellular bodies and controlling the sorting device (520) based on the image processing, the processing and controlling including: detecting detachments of first cellular bodies in the images during the application of the force; determining for detected detached first cellular body a detachment force; tracking the location of detected detached first cellular bodies during the transport of the detached cellular bodies to the sorting device; and, sorting the detached cellular bodies by controlling the sorting device based on the detachment force.

2. Method according to claim 1 wherein the manipulation further includes: focusing detached first cellular bodies into a stream of single first cellular bodies.

3. Method according to claim 2 wherein the focusing includes guiding the detached first cellular bodies (501) through a tapered focusing region of the flow cell (500) or guiding the detached first cellular bodies through a hydrodynamic focusing region, preferably the hydrodynamic focusing region being formed by forming a laminar sheath flow along the edge of part of the flow cell.

4. Method according to any of claims 1-3, wherein the manipulating further includes: exposing one or more of the detached first cellular bodies (501) to radiation of one or more predetermined wavelengths and determining one or more optical responses of the one or more detached first cellular bodies respectively; and, wherein the controlling of the sorting device is further based on the one or more optical responses.

5. Method according to any of claims 1-4 wherein the processing further includes:
determining for a detached first cellular body (501) a position at the functionalized wall at which detachment of the first cellular body occurred;
determining the detachment force for the detached first cellular body based on the location and a force correction map of the holding space, the force correction map comprising information for determining the detachment force as a function of the location in the holding space.

6. Method according to any of claims 1-5, wherein at least part of the first cellular bodies (501) are labelled first cellular bodies, preferably the labelling being based on at least one optically responsive molecule such as a fluorescent molecule, and wherein at least part of the images is captured using a fluorescent imaging system.

7. Method according to any of claims 1-6 wherein the flow cell (500) includes at least a first flow channel comprising the holding space, the first flow channel being connected to the sorting device, wherein at least part of the first flow channel is configured as an acoustically active area.

8. Method according to any of claims 1-6 wherein the flow cell (500) includes a first flow channel and a second flow channel, the second flow channel crossing the first flow channel at a cross-section, the cross-section defining a part of the holding space which is configured as an acoustically active area and the sorting device being connected to the second flow channel.

9. Method according to claim 8, wherein the first cellular bodies (501) are provided into the holding space via the first flow channel and wherein the detached first cellular bodies are transported towards the sorting device via the second flow channel.

10. Method according to any of claims 1-9 wherein the sorting device (520) is configured to receive detached first cellular bodies (501) and to move the detached first cellular bodies into one of a plurality of output channels based on the detachment force, and/or the sorting device (520) is at least one of: a hydrodynamic sorting device, a micromechanical sorting device or a sorting device comprising one or more optical traps.

11. Method according to any of claims 1-10 wherein the functionalized wall comprises second cellular bodies (512), wherein when the first cellular bodies (501) are provided into the holding space, at least part of the first cellular bodies will contact to at least part of the second cellular bodies, preferably the first cellular bodies being effector cellular bodies and the second cellular bodies being target cellular bodies; or, the second cellular bodies being effector cellular bodies and the first cellular bodies being target cellular bodies.

12. Method according to any of claims 1-11 wherein the tracking of the locations of the detached first cells (501) includes linking locations of detected detached first cells in subsequent images based on a tracking algorithm, preferably a center of mass tracking algorithm, a minimization algorithm or a global minimization algorithm.

13. A module for sorting cellular bodies based on images of cellular bodies in a flow cell connected to a sorting device, the module comprising a computer readable storage medium having computer readable program code embodied therewith, and a processor, preferably a microprocessor, coupled to the computer readable storage medium, wherein responsive to executing the computer readable program code, the processor is configured to perform executable operations comprising:
receiving images representing manipulation of first cellular bodies in a holding space of a flow cell, the flow cell including or being connected to a sorting device, the manipulation including: providing the first cellular bodies in the holding space to allow at least part of the first cellular bodies to contact a functionalized wall of the holding space; applying a force, preferably an acoustic force, to the contacted first cellular bodies in a direction away from the functionalized wall for detaching at least part of the first cellular bodies; and, transporting the detached cellular bodies to the sorting device for sorting the detached cellular bodies;
processing the sequence of images during the manipulation of the first cellular bodies and controlling the sorting device based on the image processing, the processing and controlling including: detecting detachments of first cellular bodies in the images during the application of the force; determining for each detected detached first cellular body a detachment force; tracking the location of detected detached first cellular bodies during the transport of the detached cellular bodies to the sorting device; and, sorting the detached cellular bodies by controlling the sorting device based on the detachment force.

14. A system for sorting cellular bodies comprising:
a flow cell comprising a holding space for cellular bodies;
a sorting device connected to the flow cell or included in the flow cell;
a force generator for applying a force to the cellular bodies;
an imaging system capturing images of the cellular bodies in the flow cell;
an image processing system for processing the captured images;
a controller for controlling the flow cell and the sorting device; and,
a module according to claim 13.

15. A computer program or suite of computer programs comprising at least one software code portion or a computer program product storing at least one software code portion, the software code portion, when run on a computer system, being configured for executing the method steps according any of claims 1-12.

## Patentansprüche

1. Verfahren zum Sortieren von Zellkörpern, umfassend:
Empfangen von Bildern, die eine Manipulation von ersten Zellkörpern (501) in einem Halteraum einer Durchflusszelle (500) darstellen, wobei die Durchflusszelle eine Sortiervorrichtung (520) enthält oder mit ihr verbunden ist, wobei die Manipulation Folgendes umfasst: Bereitstellen der ersten Zellkörper in dem Halteraum, damit zumindest ein Teil der ersten Zellkörper eine funktionalisierte Wand des Halteraums berührt; Aufbringen einer Kraft, vorzugsweise einer akustischen Kraft, auf die berührten ersten Zellkörper in einer Richtung weg von der funktionalisierten Wand, um zumindest einen Teil der ersten Zellkörper abzulösen; und Transportieren der abgelösten Zellkörper zu der Sortiervorrichtung zum Sortieren der abgelösten Zellkörper;
Verarbeiten der Abfolge von Bildern während der Manipulation der ersten Zellkörper und Steuern der Sortiervorrichtung (520) auf der Grundlage der Bildverarbeitung, wobei das Verarbeiten und Steuern Folgendes umfasst: Erfassen von Ablösungen erster Zellkörper in den Bildern während der Anwendung der Kraft; Bestimmen einer Ablösekraft für erfasste abgelöste erste Zellkörper; Verfolgen des Ortes erfasster abgelöster erster Zellkörper während des Transports der abgelösten Zellkörper zu der Sortiervorrichtung; und Sortieren der abgelösten Zellkörper durch Steuern der Sortiervorrichtung auf der Grundlage der Ablösekraft.

2. Verfahren nach Anspruch 1, wobei die Manipulation ferner Folgendes umfasst: Fokussieren abgelöster erster Zellkörper in einen Strom einzelner erster Zellkörper.

3. Verfahren nach Anspruch 2, wobei das Fokussieren das Führen der abgelösten ersten Zellkörper (501) durch einen sich verjüngenden Fokussierungsbereich der Durchflusszelle (500) oder das Führen der abgelösten ersten Zellkörper durch einen hydrodynamischen Fokussierungsbereich umfasst, wobei der hydrodynamische Fokussierungsbereich vorzugsweise durch Bilden einer laminaren Mantelströmung entlang des Randes eines Teils der Durchflusszelle gebildet wird.

4. Verfahren nach einem der Ansprüche 1 bis 3, wobei das Manipulieren ferner Folgendes umfasst: Aussetzen eines oder mehrerer der abgelösten ersten Zellkörper (501) einer Strahlung mit einer oder mehreren vorbestimmten Wellenlängen und Bestimmen einer oder mehrerer optischer Reaktionen des einen bzw. der mehreren abgelösten ersten Zellkörper; und wobei die Steuerung der Sortiervorrichtung ferner auf der einen oder den mehreren optischen Reaktionen basiert.

5. Verfahren nach einem der Ansprüche 1 bis 4, wobei die Verarbeitung weiterhin umfasst:
Bestimmen einer Position an der funktionalisierten Wand, an der die Ablösung des ersten Zellkörpers stattgefunden hat, für einen abgelösten ersten Zellkörper (501);
Bestimmen der Ablösekraft für den abgelösten ersten Zellkörper auf der Grundlage des Ortes und einer Kraftkorrekturkarte des Halteraums, wobei die Kraftkorrekturkarte Informationen zum Bestimmen der Ablösekraft als Funktion des Ortes in dem Halteraum umfasst.

6. Verfahren nach einem der Ansprüche 1 bis 5, wobei zumindest ein Teil der ersten Zellkörper (501) markierte erste Zellkörper sind, wobei die Markierung vorzugsweise auf mindestens einem optisch ansprechenden Molekül, wie einem fluoreszierenden Molekül, basiert, und wobei zumindest ein Teil der Bilder unter Verwendung eines fluoreszierenden Bildgebungssystems aufgenommen wird.

7. Verfahren nach einem der Ansprüche 1 bis 6, wobei die Durchflusszelle (500) mindestens einen ersten Durchflusskanal aufweist, der den Halteraum umfasst, wobei der erste Durchflusskanal mit der Sortiervorrichtung verbunden ist, wobei mindestens ein Teil des ersten Durchflusskanals als akustisch aktiver Bereich konfiguriert ist.

8. Verfahren nach einem der Ansprüche 1 bis 6, wobei die Durchflusszelle (500) einen ersten Strömungskanal und einen zweiten Strömungskanal aufweist, wobei der zweite Strömungskanal den ersten Strömungskanal in einem Querschnitt kreuzt, wobei der Querschnitt einen Teil des Halteraums definiert, der als akustisch aktiver Bereich ausgebildet ist, und wobei die Sortiereinrichtung mit dem zweiten Strömungskanal verbunden ist.

9. Verfahren nach Anspruch 8, wobei die ersten Zellkörper (501) über den ersten Strömungskanal in den Halteraum eingebracht werden und wobei die abgelösten ersten Zellkörper über den zweiten Strömungskanal zur Sortiervorrichtung transportiert werden.

10. Verfahren nach einem der Ansprüche 1 bis 9, wobei die Sortiervorrichtung (520) so konfiguriert ist, dass sie abgelöste erste Zellkörper (501) aufnimmt und die abgelösten ersten Zellkörper auf der Grundlage der Ablösekraft in einen von mehreren Ausgangskanälen bewegt, und/oder die Sortiervorrichtung (520) mindestens eine der folgenden ist: eine hydrodynamische Sortiervorrichtung, eine mikromechanische Sortiervorrichtung oder eine Sortiervorrichtung mit einer oder mehreren optischen Fallen.

11. Verfahren nach einem der Ansprüche 1-10, wobei die funktionalisierte Wand zweite Zellkörper (512) umfasst, wobei, wenn die ersten Zellkörper (501) in den Halteraum eingebracht werden, mindestens ein Teil der ersten Zellkörper mit mindestens einem Teil der zweiten Zellkörper in Kontakt kommt, wobei vorzugsweise die ersten Zellkörper Effektor-Zellkörper und die zweiten Zellkörper Ziel-Zellkörper sind; oder die zweiten Zellkörper Effektor-Zellkörper und die ersten Zellkörper Ziel-Zellkörper sind.

12. Verfahren nach einem der Ansprüche 1 bis 11, wobei die Verfolgung der Orte der abgelösten ersten Zellen (501) das Verknüpfen von Orten detektierter abgelöster erster Zellen in nachfolgenden Bildern auf der Grundlage eines Verfolgungsalgorithmus, vorzugsweise eines Schwerpunktverfolgungsalgorithmus, eines Minimierungsalgorithmus oder eines globalen Minimierungsalgorithmus, umfasst.

13. Modul zum Sortieren von Zellkörpern auf der Grundlage von Bildern von Zellkörpern in einer Durchflusszelle, die mit einer Sortiervorrichtung verbunden ist, wobei das Modul ein computerlesbares Speichermedium mit darin enthaltenem computerlesbarem Programmcode und einen Prozessor, vorzugsweise einen Mikroprozessor, der mit dem computerlesbaren Speichermedium verbunden ist, umfasst, wobei der Prozessor als Reaktion auf die Ausführung des computerlesbaren Programmcodes so konfiguriert ist, dass er ausführbare Operationen durchführt, die Folgendes umfassen:
Empfangen von Bildern, die eine Manipulation von ersten Zellkörpern in einem Halteraum einer Durchflusszelle darstellen, wobei die Durchflusszelle eine Sortiervorrichtung enthält oder mit ihr verbunden ist, wobei die Manipulation Folgendes umfasst: Bereitstellen der ersten Zellkörper in dem Halteraum, um zu ermöglichen, dass zumindest ein Teil der ersten Zellkörper eine funktionalisierte Wand des Halteraums berührt; Ausüben einer Kraft, vorzugsweise einer akustischen Kraft, auf die berührten ersten Zellkörper in einer Richtung weg von der funktionalisierten Wand, um zumindest einen Teil der ersten Zellkörper abzulösen; und Transportieren der abgelösten Zellkörper zu der Sortiervorrichtung zum Sortieren der abgelösten Zellkörper;
Verarbeiten der Abfolge von Bildern während der Manipulation der ersten Zellkörper und Steuern der Sortiervorrichtung auf der Grundlage der Bildverarbeitung, wobei das Verarbeiten und Steuern Folgendes umfasst: Erfassen von Ablösungen erster Zellkörper in den Bildern während der Anwendung der Kraft; Bestimmen einer Ablösekraft für jeden erfassten abgelösten ersten Zellkörper; Verfolgen des Ortes erfasster abgelöster erster Zellkörper während des Transports der abgelösten Zellkörper zu der Sortiervorrichtung; und Sortieren der abgelösten Zellkörper durch Steuern der Sortiervorrichtung auf der Grundlage der Ablösekraft.

14. System zum Sortieren von Zellkörpern, das Folgendes umfasst:
eine Durchflusszelle mit einem Halteraum für Zellkörper;
eine Sortiervorrichtung, die mit der Durchflusszelle verbunden oder in der Durchflusszelle enthalten ist;
einen Kraftgenerator zum Aufbringen einer Kraft auf die Zellkörper;
ein Abbildungssystem, das Bilder von den Zellkörpern in der Durchflusszelle aufnimmt;
ein Bildverarbeitungssystem zur Verarbeitung der aufgenommenen Bilder;
ein Steuergerät zur Steuerung der Durchflusszelle und der Sortiervorrichtung; und
ein Modul nach Anspruch 13.

15. Computerprogramm oder eine Folge von Computerprogrammen, das/die mindestens einen Softwarecodeabschnitt oder ein Computerprogrammprodukt umfasst, das mindestens einen Softwarecodeabschnitt speichert, wobei der Softwarecodeabschnitt, wenn er auf einem Computersystem ausgeführt wird, so konfiguriert ist, dass er die Verfahrensschritte nach einem der Ansprüche 1-12 ausführt.

## Revendications

1. Procédé de tri de corps cellulaires comprenant :
la réception d'images représentant une manipulation de premiers corps cellulaires (501) dans un espace de rétention d'une cuve à flux continu (500), la cuve à flux continu comportant ou étant raccordée à un dispositif de tri (520), la manipulation comportant : la fourniture des premiers corps cellulaires dans l'espace de rétention pour permettre à au moins une partie des premiers corps cellulaires d'entrer en contact avec une paroi fonctionnalisée de l'espace de maintien ; l'application d'une force, de préférence une force acoustique, aux premiers corps cellulaires en contact dans une direction s'éloignant de la paroi fonctionnalisée pour détacher au moins une partie des premiers corps cellulaires ; et, le transport des corps cellulaires détachés du dispositif de tri pour trier les corps cellulaires détachés ;
le traitement de la séquence d'images pendant la manipulation des premiers corps cellulaires et la commande du dispositif de tri (520) sur la base du traitement d'images, le traitement et la commande comportant : la détection de détachements de premiers corps cellulaires dans les images pendant l'application de la force ; la détermination, pour des premiers corps cellulaires détachés détectés, d'une force de détachement ; le suivi de l'emplacement des premiers corps cellulaires détachés détectés pendant le transport des corps cellulaires détachés vers le dispositif de tri ; et, le tri des corps cellulaires détachés par la commande du dispositif de tri sur la base de la force de détachement.

2. Procédé selon la revendication 1 dans lequel la manipulation comporte en outre : la concentration des premiers corps cellulaires détachés en un flux de premiers corps cellulaires individuels.

3. Procédé selon la revendication 2 dans lequel la concentration comporte le guidage des premiers corps cellulaires détachés (501) à travers une région de concentration effilée de la cuve à flux continu (500) ou le guidage des premiers corps cellulaires détachés à travers une région de concentration hydrodynamique, de préférence la région de concentration hydrodynamique étant formée par formation d'un écoulement laminaire en gaine le long du bord d'une partie de la cuve à flux continu.

4. Procédé selon l'une quelconque des revendications 1-3, dans lequel la manipulation comporte en outre : l'exposition d'un ou plusieurs des premiers corps cellulaires détachés (501) à un rayonnement d'une ou plusieurs longueurs d'onde prédéterminées et la détermination d'une ou plusieurs réponses optiques des un ou plusieurs premiers corps cellulaires détachés respectivement ; et, dans lequel la commande du dispositif de tri est en outre basée sur les une ou plusieurs réponses optiques.

5. Procédé selon l'une quelconque des revendications 1-4 dans lequel le traitement comporte en outre :
la détermination, pour un premier corps cellulaire détaché (501), d'une position au niveau de la paroi fonctionnalisée à laquelle un détachement du premier corps cellulaire s'est produit ;
la détermination de la force de détachement pour le premier corps cellulaire détaché sur la base de l'emplacement et d'une carte de correction de force de l'espace de rétention, la carte de correction de force comprenant des informations pour déterminer la force de détachement en fonction de l'emplacement dans l'espace de rétention.

6. Procédé selon l'une quelconque des revendications 1-5, dans lequel au moins une partie des premiers corps cellulaires (501) est marquée comme étant des premiers corps cellulaires, de préférence le marquage étant basé sur au moins une molécule réagissant optiquement telle qu'une molécule fluorescente, et dans lequel au moins une partie des images est capturée en utilisant un système d'imagerie par fluorescence.

7. Procédé selon l'une quelconque des revendications 1-6 dans lequel la cuve à flux continu (500) comporte au moins un premier canal d'écoulement comprenant l'espace de rétention, le premier canal d'écoulement étant raccordé au dispositif de tri, dans lequel au moins une partie du premier canal d'écoulement est configurée sous forme de zone acoustiquement active.

8. Procédé selon l'une quelconque des revendications 1-6 dans lequel la cuve à flux continu (500) comporte un premier canal d'écoulement et un deuxième canal d'écoulement, le deuxième canal d'écoulement croisant le premier canal d'écoulement au niveau d'une section transversale, la section transversale définissant une partie de l'espace de rétention qui est configurée sous forme de zone acoustiquement active et le dispositif de tri étant raccordé au deuxième canal d'écoulement.

9. Procédé selon la revendication 8, dans lequel les premiers corps cellulaires (501) sont disposés dans l'espace de rétention par l'intermédiaire du premier canal d'écoulement et dans lequel les premiers corps cellulaires détachés sont transportés vers le dispositif de tri par l'intermédiaire du deuxième canal d'écoulement.

10. Procédé selon l'une quelconque des revendications 1-9 dans lequel le dispositif de tri (520) est configuré pour recevoir des premiers corps cellulaires détachés (501) et pour déplacer les premiers corps cellulaires détachés dans l'un d'une pluralité de canaux de sortie sur la base de la force de détachement, et/ou le dispositif de tri (520) est au moins l'un parmi : un dispositif de tri hydrodynamique, un dispositif de tri micromécanique, ou un dispositif de tri comprenant un ou plusieurs pièges optiques.

11. Procédé selon l'une quelconque des revendications 1-10 dans lequel la paroi fonctionnalisée comprend des deuxièmes corps cellulaires (512), dans lequel les premiers corps cellulaires (501) sont disposés dans l'espace de rétention, au moins une partie des premiers corps cellulaires entrera en contact avec au moins une partie des deuxièmes corps cellulaires, de préférence les premiers corps cellulaires étant des corps cellulaires effecteurs et les deuxièmes corps cellulaires étant des corps cellulaires cibles ; ou, les deuxièmes corps cellulaires étant des corps cellulaires effecteurs et les premiers corps cellulaires étant des corps cellulaires cibles.

12. Procédé selon l'une quelconque des revendications 1-11 dans lequel le suivi des emplacements des premières cellules détachées (501) comporte la liaison d'emplacements de premières cellules détachées détectées dans des images consécutives sur la base d'un algorithme de suivi, de préférence un algorithme de suivi de centre de masse, un algorithme de minimisation ou un algorithme de minimisation globale.

13. Module pour trier des corps cellulaires sur la base d'images de corps cellulaires dans une cuve à flux continu raccordée à un dispositif de tri, le module comprenant un support de stockage lisible par ordinateur présentant un code de programme lisible par ordinateur intégré dans celui-ci, et un processeur, de préférence un microprocesseur, couplé au support de stockage lisible par ordinateur, dans lequel en réponse à l'exécution du code de programme lisible par ordinateur, le processeur est configuré pour réaliser des opérations exécutables comprenant :
la réception d'images représentant une manipulation de premiers corps cellulaires dans un espace de rétention d'une cuve à flux continu, la cuve à flux continu comportant ou étant raccordée à un dispositif de tri, la manipulation comportant : la fourniture des premiers corps cellulaires dans l'espace de rétention pour permettre à au moins une partie des premiers corps cellulaires d'entrer en contact avec une paroi fonctionnalisée de l'espace de rétention ;
l'application d'une force, de préférence une force acoustique, aux premiers corps cellulaires en contact dans une direction s'éloignant de la paroi fonctionnalisée pour détacher au moins une partie des premiers corps cellulaires ; et, le transport des corps cellulaires détachés vers le dispositif de tri pour trier les corps cellulaires détachés ;
le traitement de la séquence d'images pendant la manipulation des premiers corps cellulaires et la commande du dispositif de tri sur la base du traitement d'images, le traitement et la commande comportant : la détection de détachements de premiers corps cellulaires dans les images pendant l'application de la force ; la détermination, pour chaque premier corps cellulaire détaché détecté, d'une force de détachement ; le suivi de l'emplacement des premiers corps cellulaires détachés détectés pendant le transport des corps cellulaires détachés vers le dispositif de tri ; et, le tri des corps cellulaires détachés par la commande du dispositif de tri sur la base de la force de détachement.

14. Système pour trier des corps cellulaires comprenant :
une cuve à flux continu comprenant un espace de rétention pour des corps cellulaires ;
un dispositif de tri raccordé à la cuve à flux continu ou inclus dans la cuve à flux continu ;
un générateur de force pour appliquer une force aux corps cellulaires ;
un système d'imagerie capturant des images des corps cellulaires dans la cuve à flux continu ;
un système de traitement d'images pour traiter les images capturées ;
un dispositif de commande pour commander la cuve à flux continu et le dispositif de tri ; et,
un module selon la revendication 13.

15. Programme informatique ou série de programmes informatiques comprenant au moins une partie de code logiciel ou un produit de programme informatique stockant au moins une partie de code logiciel, la partie de code logiciel, lorsqu'elle est exécutée sur un système informatique, étant configurée pour exécuter les étapes de procédé selon l'une quelconque des revendications 1-12.
